# EUROPEAN PATENT SPECIFICATION

(11) **EP 2 272 684 B1**
(45) Date of publication and mention of the grant of the patent: **23.04.2014**
(21) Application number: 10168456.1
(22) Date of filing: 05.07.2010
(51) Int. Cl.: B60B 1/04, B60B 21/06

(54) **Method for manufacturing a spoked wheel, in particular of the tubeless type, and spoked wheel thereof**
Herstellungsverfahren eines Speichenrads, insbesondere eines schlauchlosen Typs, und solches Rad
Procédé de fabrication d'une roue à rayons, en particulier avec pneu de type sans chambre, et une telle roue

(30) Priority: 07.07.2009 IT TO20090512
(43) Date of publication of application: 12.01.2011
(73) Proprietor: Accossato, Severino, 10136 Torino (IT)
(72) Inventor: Accossato, Severino, 10136 Torino (IT)
(74) Representative: Camolese, Marco

(56) References cited:
- EP-A- 1 209 006
- EP-A- 1 518 717
- WO-A-2005/058613
- JP-A- 2000 127 701
- US-A- 5 806 935

## Description

The present invention relates to a method for manufacturing a spoked wheel, in particular of the tubeless type, according to the preamble of claim 1.

The present invention also relates to a spoked wheel, in particular of the tubeless type, manufactured in accordance with said method.

Spoked wheels, i.e. wheels of the type that comprises a rim and a hub constrained to each other by means of a plurality of spokes, are well known in the art, for example from documents JP2000-127701 and WO2005/058613A1.

Each spoke of said plurality of spokes is coupled to the rim through a threaded connecting element (also called "nipple") which comprises a head housed in a seat (also called "recess") of the rim and a body coming out of a through hole obtained in said recess, so as to protrude radially towards the inside of the rim.

As known, the nipple body has an axial threaded hole intended for receiving a first end of the spoke, said first end being threaded as well.

In general, the nipple also performs the function of tensioning the spoke between the rim and the hub; for this purpose, the nipple head has a radial notch adapted to receive a suitable tool, such as a screwdriver, for screwing/unscrewing the nipple when installing the spoke. Furthermore, the nipple body has a shape suited to receive another tool, such as a wrench, for tightening the spoke.

The spoked wheels known in the art suffer from the drawback that they do not provide airtightness in the coupling region between the rim and the nipple; as a consequence, when a tubeless tyre is used, the air in the tyre can leak through the gaps present between the through hole in the recess and the nipple.

International patent application No. WO2007/049317A1 tries to solve this problem by positioning a sealing element, in particular an O-ring, between the nipple body and the through hole in the recess.

However, the solution described in said patent application has some drawbacks as well, because the sealing element is subject to the various stresses withstood by the rim and the spokes, since when in use the rim and the spokes are subject to elastic deformations that they must absorb. As a result, such stresses and elastic deformations necessarily imply movements, high wear and deformations of the O-ring, thereby impairing the sealing action of the latter.

The solution proposed by the international patent application published under No. W02007/049317A1 uses a specific rim having a tubular appendix adapted to insulate each recess and the respective nipple from the tyre tube.

However, even the solution described in said patent application has some drawbacks, since it requires the use of a specific rim exclusively suited to tubeless tyres, and therefore hardly usable with tube-type tyres.

It follows that the solution described in said document W02007/049317A1 is scarcely versatile, requires more complex machining, and is more costly.

In this frame, it is the main object of the present invention to overcome the above-mentioned drawbacks by providing a method for manufacturing a spoked wheel, in particular of the tubeless type, which ensures optimal airtightness, in particular in the coupling region between the rim and the nipple.

It is another main object of the present invention to provide a method for manufacturing a spoked wheel, in particular of the tubeless type, which allows to obtain a spoked wheel in which the stresses and elastic deformations to be absorbed by the rim and the spokes do not impair airtightness.

It is a further main object of the present invention to provide a method for manufacturing a spoked wheel, in particular of the tubeless type, which offers a low-cost, versatile solution. Said objects are achieved by the present invention through a method for manufacturing a spoked wheel, in particular of the tubeless type, incorporating the features set out in the appended claims, which are intended as an integral part of the present description.

The present invention also relates to a spoked wheel, in particular of the tubeless type, obtained in accordance with said method.

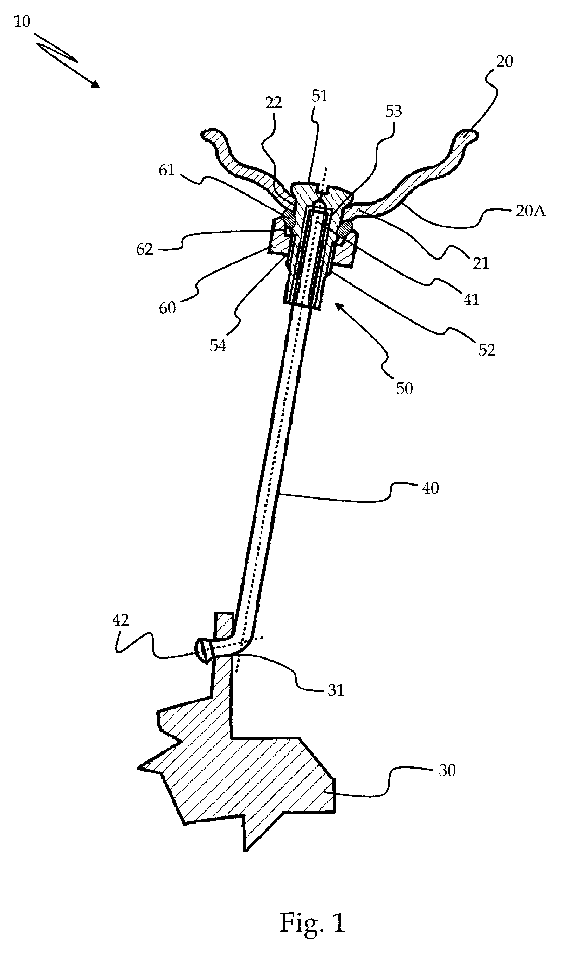

Further objects, features and advantages of the present invention will become apparent from the following detailed description and from the annexed drawings, which are supplied by way of non-limiting example, wherein Fig. 1 is a partial and schematic view of the longitudinal section of a spoked wheel, in particular of the tubeless type, manufactured in accordance with the present invention.

In the annexed drawing, reference numeral 10 designates as a whole a spoked wheel, in particular of the tubeless type, according to the present invention.

Said spoked wheel 10 comprises a rim 20 and a hub 30 constrained to each other by means of a plurality of spokes 40.

Each spoke 40 of said plurality of spokes 40 is coupled to the rim 20 through a nipple 50 which comprises a head 51 housed in a recess 21 of the rim 20 and a body 52 coming out of a through hole 22 obtained in said recess 21, so as to protrude radially towards the inside of the rim 20.

Said recess 21 is obtained, in particular by means of hot or cold deforming techniques, in a central portion of the rim 20, and is shaped like a substantially circular flared seat in order to receive said head 51 of the nipple 50; it is apparent that the recess 21 may alternatively be provided in a lateral portion of the rim 20, e.g. by means of said deforming techniques or different techniques.

As can be seen in the annexed drawing, the body 52 of the nipple 50 has an axial hole 53 intended for receiving a first end 41 of the spoke 40; in particular, the coupling between the axial hole 53 and said first end 41 may occur by mutual screwing, the axial hole 53 and the first end 41 being provided with a suitable thread.

A second end 42 of the spoke 40 is associated with the hub 30 by inserting it into a passage 31 of said hub 30; however, it is clear that said second end 42 of the spoke 40 may also be associated with the hub 30 in a different manner, e.g. through a suitable coupling element (not shown in Fig. 1).

According to the present invention, the method comprises the step of securing a counter element 60 to the body 52 of the nipple 50 for sealing any gaps between the through hole 22 of the recess 21 and the body 52 of the nipple 50.

In particular, said counter element 60 is secured to that portion of the body 52 which faces the outer surface 20A of the rim 20, i.e. to the portion of the body 52 which comes out of the through hole 22 and protrudes radially towards the inside of the rim 20.

Preferably, the counter element 60 is secured to the body 52 of the nipple 50 by positioning a sealing element 61 in contact with said outer surface 20A of the rim 20, with the body 52 of the nipple 50, and with the counter element 60.

Said sealing element 61 may be made substantially in one piece with the counter element 60, or else it may be manufactured separately from said counter element 60.

In a preferred embodiment, said counter element 60 is so conceived as to comprise a substantially tapered thrust surface 62 that allows optimal pressure to be exerted onto the sealing element 61, thus preventing any air leaks from the wheel 10, especially when travelling on bumpy roads.

Preferably, said counter element 60 is secured to the body 52 of the nipple 50 by screwing the counter element 60 onto a threaded portion 54 of said body 52. As an alternative, the counter element 60 may be locked by means of a snap ring (of the type known as "seeger", not shown in Fig. 1) or through a bayonet coupling, etc.

Furthermore, the counter element 60 is secured to the body 52 of the nipple 50 before the spoke 40 is coupled to the nipple 50, this latter coupling being in particular carried out by inserting the first end 41 of the spoke 40 into the axial hole 53 of the nipple 50.

The advantages of a method for manufacturing a spoked wheel, in particular of the tubeless type, and of a spoked wheel thereof according to the present invention are apparent from the above description.

In particular, such advantages consist in that the method for manufacturing a spoked wheel according to the present invention, and the spoked wheel thereof, allow to obtain optimal airtightness of the tyre (not shown in the drawing), in particular in the coupling region between the rim 20 and the nipple 50.

In fact, due to the use of the counter element 60 and of the sealing element 61, the pressurized air in the chamber comprised between the inner surface of the tyre and the rim 20 cannot go out through the interspace formed by the through hole 22 of the recess 21 and the nipple 50.

In addition, the counter element 60 and the sealing element 61 allow the spoked wheel 10 according to the present invention to adequately absorb the stresses and elastic deformations that the rim 20 and the spokes are subject to, in particular by ensuring the necessary axial movement of the spoke 40, which movement allows said stresses to be absorbed without impairing the airtightness of the rim 20.

Another advantage of the method for manufacturing a spoked wheel according to the present invention, and of the spoked wheel thereof, lies in that the counter element 60 provides an optimal mechanical seal between the rim 20 and each spoke 40, thus avoiding that a spoke 40 may break and get into the chamber comprised between the inner surface of the tyre and the rim 20, which would inevitably lead to a sudden pressure drop in the tyre that might jeopardize the stability of the vehicle and the safety of its users.

Furthermore, the presence of a counter element 60 so conceived as to comprise a tapered thrust surface 62 ensures that optimal pressure is exerted onto the sealing element 61, thus preventing any air from leaking from the wheel 10, especially when travelling on bumpy roads.

Yet another advantage of the method for manufacturing a spoked wheel according to the present invention, and of the spoked wheel thereof, is that they allow to obtain a solution which is both economical and versatile.

The method and the spoked wheel 10 described herein by way of example may be subject to many possible variations without departing from the novelty spirit of the inventive idea; it is also clear that in the practical implementation of the invention the illustrated details may have different shapes or be replaced with other technically equivalent elements.

Among the possible variants, it is worth mentioning the one (not shown in Fig. 1) wherein the first end 41 of the spoke 40 is so designed as to comprise a riveted portion adapted to be received into a cavity associated with the body 52 of the nipple 50 or obtained in said body 52.

According to this variant, the wheel 10 can be so designed as to allow axial movement of the spoke 40 within the cavity associated with the nipple 50 (or obtained in the body 52); as a result, also this variant embodiment is suitable for absorbing the elastic deformations to which the rim 20 is normally subjected without however impairing the seal of the coupling between the rim 20 and the nipple 50, thus keeping the chamber comprised between the inner surface of the tyre and the rim 20 airtight.

It can therefore be easily understood that the present invention is not limited to the above-described method for manufacturing a spoked wheel, in particular of the tubeless type, and spoked wheel thereof, but may be subject to many modifications, improvements or replacements of equivalent parts and elements without departing from the inventive idea, as clearly specified in the following claims.

## Claims

1. Method for manufacturing a spoked wheel (10), in particular of the tubeless type, of the type that comprises a rim (20) and a hub (30) constrained to each other by means of a plurality of spokes (40), each spoke (40) being coupled to the rim (20) through a nipple (50) which comprises:
- a head (51) housed in a recess (21) of the rim (20), and
- a body (52) coming out of a through hole (22) obtained in said recess (21), so as to protrude radially towards the inside of the rim (20),
said method comprising the step of securing a counter element (60) to that portion of said body (52) which faces an outer surface (20A) of the rim (20) for sealing any gaps between said through hole (22) and said body (52),
**characterized in that**
said counter element (60) is secured to the body (52) by positioning a sealing element (61) in contact with said outer surface (20A) of the rim (20), with the body (52), and with the counter element (60).

2. Method according to claim 1, **characterized in that** said sealing element (61) is manufactured substantially in one piece with the counter element (60).

3. Method according to claim 1, **characterized in that** said sealing element (61) is manufactured separately from said counter element (60).

4. Method according to claim 1, **characterized in that** said counter element (60) is so conceived as to comprise a substantially tapered thrust surface (62) that allows optimal pressure to be exerted onto the sealing element (61).

5. Method according to claim 1, **characterized in that** said counter element (60) is secured to the body (52) of the nipple (50) by screwing the counter element (60) onto a threaded portion (54) of said body (52).

6. Method according to claim 1, **characterized in that** said counter element (60) is secured to the body (52) of the nipple (50) by locking the counter element (60) by means of a snap ring.

7. Method according to claim 1, **characterized in that** said counter element (60) is secured to the body (52) of the nipple (50) before coupling the spoke (40) to the nipple (50).

8. Method according to claim 7, **characterized in that** the spoke (40) is coupled to the nipple (50) by inserting a first end (41) of the spoke (40) into an axial hole (53) of the nipple (50).

9. Method according to claim 7, **characterized in that** the spoke (40) is coupled to the nipple (50) by inserting a first end (41) of the spoke (40) into a cavity associated with or obtained in the body (52) of the nipple (50).

10. Spoked wheel (10), in particular of the tubeless type, of the type that comprises a rim (20) and a hub (30) constrained to each other by means of a plurality of spokes (40), each spoke (40) being coupled to the rim (20) through a nipple (50) which comprises:
- a head (51) housed in a recess (21) of the rim (20), and
- a body (52) coming out of a through hole (22) obtained in said recess (21), so as to protrude radially towards the inside of the rim (20),
said spoked wheel (10) comprising a counter element (60) secured to that portion of the body (52) which faces an outer surface (20A) of the rim (20), so as to seal any gaps between said through hole (22) and said body (52),
**characterized in that**
said spoked wheel (10) comprises a sealing element (61) positioned in contact with said outer surface (20A) of the rim (20), with the body (52), and with the counter element (60).

11. Spoked wheel (10) according to claim 10, **characterized in that** said counter element (60) comprises a substantially tapered thrust surface (62) that allows optimal pressure to be exerted onto the sealing element (61).

## Patentansprüche

1. Verfahren zum Herstellen eines Speichenrades (10), insbesondere der schlauchlosen Art, in der Bauart, die eine Felge (20) und eine Nabe (30) umfasst, die zueinander mittels mehrerer Speichen (40) fixiert sind, wobei jede Speiche (40) mit der Felge (20) durch einen Nippel (50) verbunden ist, wobei dieser umfasst:
- einen in einer Ausnehmung (21) der Felge (20) angeordneten Kopf (51), und
- einen Körper (52), der aus einer aus der Ausnehmung (21) erhaltenen Durchgangsbohrung (22) herauskommt, sodass er radial in Richtung der Innenseite der Felge (20) herausragt,
wobei das Verfahren den Schritt der Befestigung eines Konterelements (60) an dem Teil des Körpers (52) umfasst, der in Richtung einer äußeren Fläche (20A) der Felge (20) zeigt, zum Abdichten jeder Lücke zwischen der Durchgangsbohrung (22) und dem Körper (52),
**dadurch gekennzeichnet, dass**
das Konterelement (60) an dem Körper (52) befestigt ist durch Positionieren eines Dichtungselements (61) in Kontakt mit der äußeren Fläche (20A) der Felge (20), mit dem Körper (52) und mit dem Konterelement (60).

2. Verfahren gemäß Anspruch 1, **dadurch gekennzeichnet, dass** das Dichtungselement (61) im Wesentlichen in einem Stück mit dem Konterelement (60) hergestellt ist.

3. Verfahren gemäß Anspruch 1, **dadurch gekennzeichnet, dass** das Dichtungselement (61) separat von dem Konterelement (60) hergestellt ist.

4. Verfahren gemäß Anspruch 1, **dadurch gekennzeichnet, dass** das Konterelement (60) so konzipiert ist, dass es eine im Wesentlichen konische Druckfläche (62) umfasst, die es zulässt, einen optimalen Druck auf das Dichtungselement (61) auszuüben.

5. Verfahren gemäß Anspruch 1, **dadurch gekennzeichnet, dass** das Konterelement (60) an dem Körper (52) des Nippels (50) durch Schrauben des Konterelements (60) auf einen mit einem Gewinde versehenen Teil (54) des Körpers (52) befestigt ist.

6. Verfahren gemäß Anspruch 1, **dadurch gekennzeichnet, dass** das Konterelement (60) an dem Körper (52) des Nippels (50) durch Verriegeln des Konterelements (60) mittels eines Sicherungsrings befestigt ist.

7. Verfahren gemäß Anspruch 1, **dadurch gekennzeichnet, dass** das Konterelement (60) vor dem Verbinden der Speiche (40) mit dem Nippel (50) an den Körper (52) des Nippels (50) befestigt ist.

8. Verfahren gemäß Anspruch 7, **dadurch gekennzeichnet, dass** die Speiche (40) mit dem Nippel (50) durch Einführen eines ersten Endes (41) der Speiche (40) in ein axiales Loch (53) des Nippels (50) verbunden ist.

9. Verfahren gemäß Anspruch 7, **dadurch gekennzeichnet, dass** die Speiche (40) mit dem Nippel (50) verbunden ist durch Einführen eines ersten Endes (41) der Speiche (40) in eine mit dem Körper (52) des Nippels (50) verbundene oder aus dem Körper (52) des Nippels (50) erhaltene Vertiefung.

10. Speichenrad (10), insbesondere der schlauchlosen Art, in der Bauart, die eine Felge (20) und eine Nabe (30) aufweist, die zueinander mittels mehrerer Speichen (40) fixiert sind, wobei jede Speiche (40) mit der Felge (20) durch einen Nippel (50) verbunden ist, wobei dieser umfasst:
- einen in einer Ausnehmung (21) der Felge (20) angeordneten Kopf (51), und
- einen Körper (52), der aus einer aus der Ausnehmung (21) erhaltenen Durchgangsbohrung (22) herauskommt, sodass er radial in Richtung der Innenseite der Felge (20) herausragt,
wobei das Speichenrad (10) ein Konterelement (60) aufweist, das an dem Teil des Körpers (52) befestigt ist, der in Richtung einer äußeren Fläche (20A) der Felge (20) zeigt, so dass jede Lücke zwischen der Durchgangsbohrung (22) und dem Körper (52) abgedichtet ist,
**dadurch gekennzeichnet, dass**
das Speichenrad (10) ein Dichtungselement (61) aufweist, das in Kontakt mit der äußeren Fläche (20A) der Felge (20), mit dem Körper (52) und mit dem Konterelement (60) positioniert ist.

11. Speichenrad (10) gemäß Anspruch 10, **dadurch gekennzeichnet, dass** das Konterelement (60) eine im Wesentlichen konische Druckfläche (62) aufweist, die es zulässt, einen optimalen Druck auf das Dichtungselement (61) auszuüben.

## Revendications

1. Procédé de fabrication d'une roue à rayons (10), en particulier avec pneu du type sans chambre, du type qui comporte une jante (20) et un moyeu (30) accouplés de façon rigide l'un à l'autre au moyen d'une pluralité de rayons (40), chaque rayon (40) étant couplé à la jante (20) par un écrou de rayon (50), lequel comporte,
- une tête (51) logée dans un évidement (21) de la jante (20), et
- un corps (52) sortant d'un trou de passage (22) réalisé dans ledit évidement (21) de façon à s'étendre radialement vers l'intérieur de la jante (20),
ledit procédé comprenant l'étape consistant à fixer un contre-élément (60) à cette partie dudit corps (52) qui fait face à une surface extérieure (20A) de la jante (20) en vue de fermer de façon étanche tous les intervalles entre ledit trou (22) et ledit corps (52),
**caractérisé en ce que**
ledit contre-élément (60) est fixé au corps (52) en positionnant un élément d'étanchéité (61) en contact avec ladite surface extérieure (20A) de la jante (20), avec le corps (52) et avec le contre-élément (60).

2. Procédé selon la revendication 1, **caractérisé en ce que** ledit élément d'étanchéité (61) est fabriqué essentiellement en une seule pièce avec le contre-élément (60).

3. Procédé selon la revendication 1, **caractérisé en ce que** ledit élément d'étanchéité (61) est fabriqué indépendamment dudit contre-élément (60).

4. Procédé selon la revendication 1, **caractérisé en ce que** ledit contre-élément (60) est conçu de façon à comporter une surface de poussée essentiellement conique (62), ce qui permet à une pression optimale d'être exercée sur l'élément d'étanchéité (61).

5. Procédé selon la revendication 1, **caractérisé en ce que** ledit contre-élément (60) est fixé au corps (52) de l'écrou de rayon (50) en vissant le contre-élément (60) sur une partie filetée (54) dudit corps (52).

6. Procédé selon la revendication 1, **caractérisé en ce que** ledit contre-élément (60) est fixé au corps (52) de l'écrou de rayon (50) en bloquant le contre-élément (60) au moyen d'un circlip extérieur.

7. Procédé selon la revendication 1, **caractérisé en ce que** ledit contre-élément (60) est fixé au corps (52) de l'écrou de rayon (50) avant de coupler le rayon (40) à l'écrou de rayon (50).

8. Procédé selon la revendication 7, **caractérisé en ce que** le rayon (40) est couplé à l'écrou de rayon (50) en insérant une première extrémité (41) du rayon (40) dans un trou axial (53) de l'écrou de rayon (50).

9. Procédé selon la revendication 7, **caractérisé en ce que** le rayon (40) est couplé à l'écrou de rayon (50) en insérant une première extrémité (41) du rayon (40) dans une cavité associée au, ou réalisée dans le, corps (52) de l'écrou de rayon (50).

10. Roue à rayons (10), en particulier à pneu du type sans chambre, du type qui comporte une jante (20) et un moyeu (30) accouplés de façon rigide l'un à l'autre au moyen d'une pluralité de rayons (40), chaque rayon (40) étant couplé à la jante (20) à travers un écrou de rayon (50), lequel comporte :
- une tête (51) logée dans un évidement (21) de la jante (20), et
- un corps (52) sortant d'un trou de passage (22) réalisé dans ledit évidement (21) de façon à s'étendre radialement vers l'intérieur de la jante (20),
ladite roue à rayon (10) comprenant un contre-élément (60) fixé sur cette partie du corps (52) qui fait face à une surface extérieure (20A) de la jante (20), de façon à fermer de façon étanche tous les intervalles compris entre ledit trou de passage (22) et ledit corps (52), **caractérisée en ce que**
ladite roue à rayons (10) comporte un élément d'étanchéité (61) positionné en contact avec ladite surface extérieure (20A) de la jante (20), avec le corps (52), et avec le contre-élément (60).

11. Roue à rayons (10) selon la revendication 10, **caractérisée en ce que** ledit contre-élément (60) comporte une surface de poussée essentiellement conique (62), ce qui permet à une pression optimale d'être exercée sur l'élément d'étanchéité (61).
